# EUROPÄISCHE PATENTANMELDUNG

(11) **EP 0 794 421 A2**
(43) Veröffentlichungstag der Anmeldung: **10.09.1997**
(21) Anmeldenummer: 97102618.2
(22) Anmeldetag: 19.02.1997
(51) Int. Cl.: G01N 1/24, G05D 5/04, B02C 19/06

(54) **Verfahren zur Probennahme bei partikelbeladenen Gasströmen**

(30) Priorität: 04.03.1996 DE 19608242
(71) Anmelder: BAYER AG, 51368 Leverkusen (DE)
(72) Erfinder: Ulfik, Benno, Dipl.-Ing., 51379 Leverkusen (DE); Benz, Mathias, Dr., 51427 Bergisch Gladbach (DE); Schmitz, Jörg Rainer, Dr., 58239 Schwerte (DE); Herold, Heiko, Dipl.-Ing., 41470 Neuss (DE)

(57) **Zusammenfassung**

Bei dem Verfahren zur kontinuierlichen Entnahme von pulverförmigen bzw. staubförmigen Proben aus einer partikelbeladenen Strömung wird aus einem partikelbeladenen Hauptstrom in einer pneumatischen Förderleitung 17 ein Probenstrom abgesaugt und durch eine Entnahmeleitung 9 einem Partikelgrößenmeßgerät 10 zugeführt. Zur Drallberuhigung wird der Hauptstrom in der Förderleitung 17 durch eine Venturi-düsenartige Querschnittverengung 3, 4, 5 geführt, deren Querschnittsfläche 10 % bis 60 % der freien Querschnittsfläche der Förderleitung 17 beträgt. Die Probenentnahme erfolgt dann stromabwärts der Querschnittsverengung durch ein oder mehrere Sondenrohre 7, wobei ein Teilstrom aus dem Hauptstrom parallel zu dessen Strömungsrichtung entnommen wird. In Verbindung mit einer Strahlmühle 14, der das zu mahlende Produkt und die Treibluft kontinuierlich zugeführt werden, kann die in dem kontinuierlich entnommenen Probenstrom gemessene Partikelgrößenverteilung als Regelgröße verwendet werden um einen für die Partikelgrößenverteilung maßgeblichen Betriebsparameter der Strahlmühle 14 in der Weise nachzustellen, daß die Partikelgrößenverteilung im Produktstrom konstant bleibt.

## Beschreibung

Die Erfindung betrifft ein Verfahren zur kontinuierlichen Entnahme von pulverförmigen Proben aus einer partikelbeladenen Strömung, bei dem aus einem partikelbeladenen Hauptstrom in einer pneumatischen Förderleitung ein Probenstrom abgesaugt und durch eine Entnahmeleitung einem Meßgerät zugeführt wird.

Zur Probennahme aus pneumatischen Förderleitungen sind verschiedene handelsübliche Entnahmesonden bekannt. Es hat sich jedoch gezeigt, daß dabei Systematische Meßfehler auftreten können, die häufig von der Lage der Entnahmesonde in der Förderleitung abhängen. Aus Untersuchungen von A. Bürkholz, Staub - Reinhaltung der Luft 51 (1991) S. 395-400 ist bekannt, daß man bei Partikelmessungen mit Hilfe einer Entnahmesonde nur dann eine repräsentative Probe der im Luftstrom der Förderleitung transportierten Partikel erhält, wenn eine geschwindigkeitsgleiche Absaugung unter Vermeidung von möglichst jeder Krümmung der Stromlinien der Luft bei Eintritt in die Sonde erfolgt. Diese Kriterien werden als isokinetische Entnahmebedingungen bezeichnet.

Der Erfindung liegt die Aufgabe zugrunde, einen repräsentativen Teilstrom aus dem Hauptstrom in einer Produkt-beladenen pneumatischen Förderleitung unter Beachtung der isokinetischen Entnahmebedingungen abzuziehen, um ihn einer kontinuierlichen Partikelgrößenanalyse zuzuführen. In einem weiteren Schritt soll dann die Partikelgrößenanalyse zur automatischen Einstellung und Nachregelung der Partikelgröße des aus einer Strahlmühle oder aus einem Sichter austretenden, partikelbeladenen Produktstroms dienen.

Diese Aufgabe wird erfindungsgemäß dadurch gelöst, daß der Hauptstrom zur Drallberuhigung durch eine Förderleitung mit einer Venturi-düsenartigen Querschnittsverengung geführt wird, deren Querschnittsfläche 10 % bis 60 % der freien Querschnittsfläche der Förderleitung beträgt und daß stromabwärts der Querschnittsverengung durch ein oder mehrere Sondenrohre ein Teilstrom aus dem Hauptstrom parallel zu dessen Strömungsrichtung entnommen wird.

Eine weitere Verbesserung der Drallberuhigung kann durch rotationssymmetrische, innerhalb der Querschnittsverengung angebrachte, achsenparallele oder schräg angestellte Leitflügel erreicht werden.

Gemäß einer bevorzugten Ausführung der Erfindung erfolgt die Entnahme der Probe aus dem Hauptstrom durch mehrere Sondenrohre, die zu einer gemeinsamen Entnahmeleitung zusammengeführt sind.

Im Zuge einer Weiterentwicklung wird die erfindungsgemäße Probennahme in Verbindung mit einer Regelung der Partikelgröße eingesetzt. Auf diese Weise kann die. Partikelgröße in einem produktbeladenen Luftstrom konstant gehalten werden. Besonders geeignet ist dieses Verfahren bei Strahlmühlen, z.B. bei einer Spiralstrahlmühle oder Fließbett-Gegenstrahlmühle, bei denen das zu mahlende Produkt und Treibgas kontinuierlich zugeführt und an deren Ausgang ein Produkthauptstrom kontinuierlich abgezogen werden. Dabei wird vorteilhaft die Partikelgrößenverteilung des aus dem Produktstrom entnommenen Probenstroms ebenfalls kontinuierlich gemessen und der Produktaufgabestrom oder der Treibluftmengenstrom oder der Mahldüsenvordruck und im Falle einer FließbettGegenstrahlmühle vorzugsweise die Drehzahl eines darin integrierten Schaufelradsichters so nachgestellt, daß ein vorgegebener Sollwert für die Partikelgrößenverteilung im Produktstrom eingehalten wird.

Mit der Erfindung werden folgende Vorteile erzielt:

Das erfindungsgemäße Verfahren schafft die funktionellen Voraussetzungen für eine repräsentative und gleichmäßige Probennahme in pneumatischen Förderleitungen unter isokinetischen Bedingungen und der damit verbundenen erhöhten Meßgenauigkeit. Darüber hinaus ist die Sonde einfach und robust-aufgebaut und kann vielseitig eingesetzt werden. Dadurch wird die Einbeziehung der Entnahmesonde in ein Meß- und Regelsystem in Verbindung mit Strahlmühlen ermöglicht, um einen gewünschten Sollwert für die Partikelgrößenverteilung einzustellen und einzuhalten.

Im folgenden wird die Erfindung anhand von Zeichnungen und Ausführungsbeispielen näher erläutert. Es zeigen:
- Fig. 1: einen Ausschnitt aus einer Förderleitung für einen Produkthauptstrom mit einer Querschnittsverengung und einem Entnahmerohr für die Probe
- Fig. 2: eine Förderleitung analog zu Fig.1 mit mehreren Entnahmerohren, die zu einer Ringleitung zusammengefaßt sind,
- Fig. 3: ein Fließschema für eine On-Line Regelung der Partikelgröße bei einer Mahlanlage unter Verwendung der isokinetischen Entnahmesonde gem. Fig.1 oder Fig. 2 und
- Fig.4: ein Meßbeispiel für die kontinuierliche on-line Erfassung der Partikelgrößenverteilung von gemahlenem Zucker (Versuchsprodukt) im Hauptstrom einer Spiralstralmühle bei verschiedenen Mahldüsenvordrucken

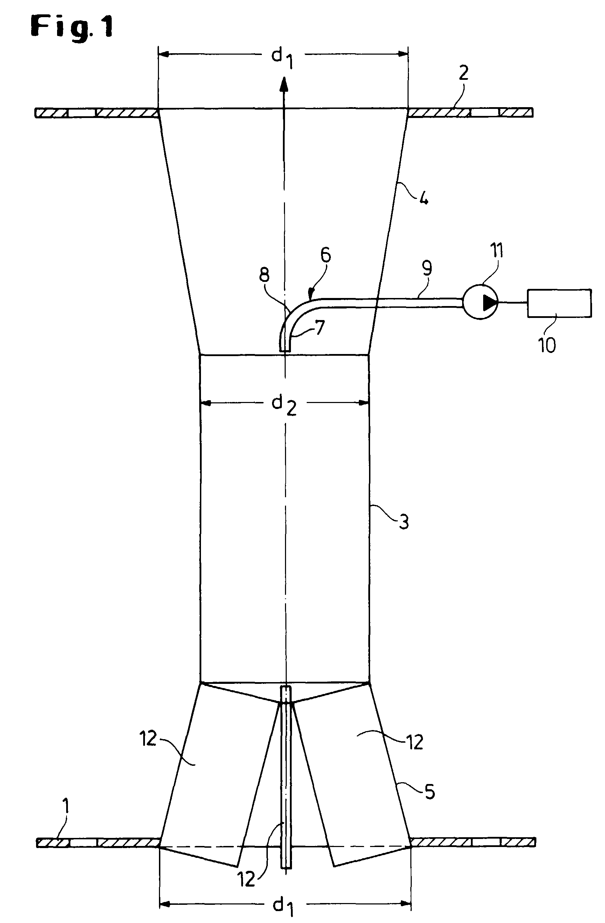

Das in Fig.1 dargestellte Teilstück einer Förderleitung wird in Pfeilrichtung von einem partikelbeladenen Luftstrom (Hauptstrom) durchströmt. Es besteht aus den Flanschen 1 und 2 zum Einbau in die Förderleitung, einem Rohrabschnitt mit verengtem Querschnitt 3, einem, sich in Strömungsrichtung erweiterternden, konischen Rohrstuck 4 und einem konvergierend konischen Rohrstück 5 am Eintritt in die Querschnittsverengung 3. Die Konizität des Rohrstücks 4 beträgt z.B. 10° , die des Rohrstücks 5 14°. Das Verhältnis d₁ : d₂ der Durchmesser von Förderleitung und Querschnittsverengung 3 liegt im Bereich von 0,3 bis 0,8. Stromabwärts der Querschnittsverengung 3 ist eine Entnahmesonde 6 in Form eines offenen axialen Sondenrohrs 7 angebracht, das über einen Krümmer 8 mit einer senkrecht zur Förderleitung herausgeführten Entnahmeleitung 9 verbunden ist. Diese Form trägt wesentlich dazu bei, daß der Strömungsverlauf in der Förderleitung möglichst wenig gestört wird. Der Hauptstrom trifft im wesentlichen senkrecht auf die Mündungsfläche des axialen Sondenrohrs 7 der Entnahmesonde auf. Durch die Entnahmesonde wird dem Hauptstrom eine Probe entnommen und über die Entnahmeleitung 9 einem Partikelgrößenmeßgerät 10 zugeführt. Zu diesem Zweck ist am Eingang des Meßgeräts 10 ein Luftstrahlinjektor 11 eingebaut, dessen Saugleistung so bemessen ist, daß die Strömungsgeschwindigkeit des entnommenen Teilstroms am Eintritt in das axiale Sondenrohr 7 mit der des Hauptstroms annähernd übereinstimmt. Die Querschnittsverengung 3 bewirkt eine Vergleichmäßigung und Beruhigung der Strömung am Entnahmeort, d.h. am Eintritt in das Sondenrohr 7.

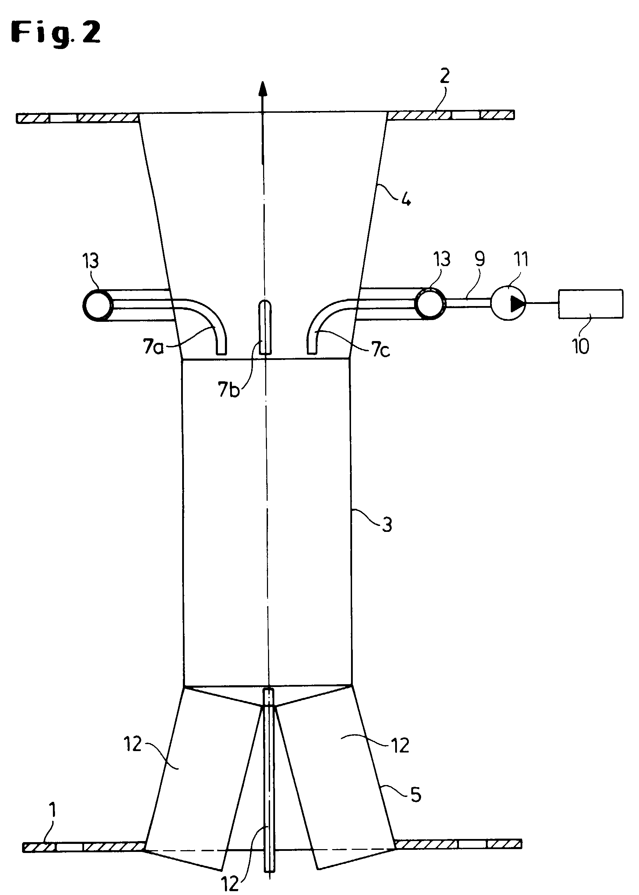

Eine zusätzliche Strömungsberuhigung und Vergleichmäßigung kann durch rotationssymmetrisch im konischen Rohrstück 5 angebrachte, achsenparallele Leitflügel 12 erreicht werden. Gemäß Fig. 1 und Fig. 2 sind hier vier gleichmäßig über den Umfang verteilte Leitflügel 12 vorgesehen. Durch solche Leitflügel kann insbesondere eine Drall-behaftete Strömung, die häufig bei den aus Strahlmühlen austretenden Produktströmen (Produktaustrag) zu beobachten ist wirksam vergleichmäßigt werden. Die Leitflügel 12 können auch schräg zur Strömungsrichtung angestellt sein. In diesem Fall muß durch entsprechende Wahl des Anstellwinkels dafür Sorge getragen werden, daß eine evtl. vorhandene Drallkomponente im Hauptstrom nicht verstärkt, sondern abgeschwächt wird. Die Strömungsvergleichmäßigung und -beruhigung ist eine wesentliche Voraussetzung für eine reproduzierbare und repräsentative Probennahme aus dem partikelbeladenen Hauptstrom unter isokinetischen Bedingungen. Anderenfalls könnten erhebliche Abweichungen hinsichtlich der Partikelgrößenverteilungen im Hauptstrom und Entnahmeteilstrom auftreten, so daß die Probennahme für den Hauptstrom nicht repräsentativ und die Messung mit einem systematischen Fehler behaftet wäre.

Gemäß einer alternativen Ausführung sind, wie in Fig. 2 dargestellt, mehrere (drei) Sondenrohre 7a, 7b,7c in einer Ebene stromabwärts der Querschnittsverengung 3 am Übergang zu dem konisch divergierenden Rohrstück 4 angebracht. Die drei Sondenrohre 7a,7b,7c sind über eine die Förderleitung umschließende Ringleitung 13 zusammengefaßt und mit der Entnahmeleitung 9 verbunden. Diese Anordnung hat den Vorteil, daß örtliche Inhomogenitäten der Partikelverteilung im Hauptstrom ausgemittelt werden.

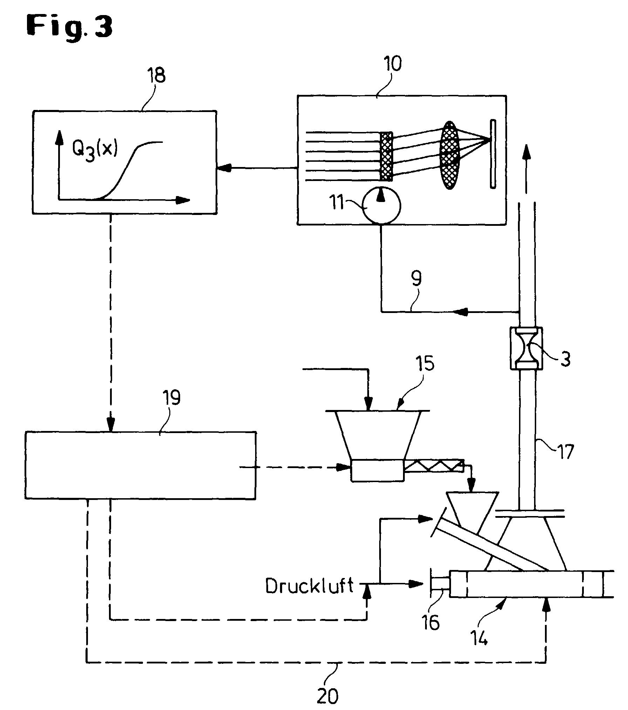

Fig. 3 zeigt schematisch einen Regelkreis unter Einbeziehung der oben beschriebenen Probennahme zur Einstellung und Konstanthaltung der Partikelgröße in einer mit dem Austrag einer Spiralstrahlmühle 14 verbundenen Förderleitung 17. Bei der Spiralstrahlmühle handelt es sich um einen speziellen Typ einer Luftstrahlmühle. Dabei wird das zu mahlende Produkt mittels einer Dosiervorrichtung 15 der Spiralstrahlmühle 14 zugeführt. Außerdem wird die Spiralstrahlmühle über den Stutzen 16 mit Druckluft beaufschlagt. Das gemahlene Produkt wird durch die Förderleitung 17 ausgetragen, in der sich die bereits erläuterte Querschnittsverengung 3 befindet.

Stromabwärts der Querschnittsverengung 3 wird, wie oben beschrieben, aus dem in der Förderleitung 17 strömenden partikelbeladenen Luftstrom (Hauptstrom) ein Teilstrom durch die Entnahmeleitung 9 abgezweigt und dem auf der Laserlichtstreuung beruhenden Partikelgrößenmeßgerat 10 zugeführt. Der Teilmengenstrom beträgt ca 1 % bis 3% des Hauptmengenstroms. Als Partikelmeßgerät ist z.B. das Gerät HELOS der Firma Sympatec (Clausthal Deutschland) geeignet. Dieses Gerät liefert direkt (On-line) charakteristische Werte für die Partikelgrößenverteilung der entnommenen Probe, z.B. den d₁₀ , d₅₀ oder den d₉₀-Wert. Der d₁₀-Wert ist z.B. definitionsgemäß der Durchmesser, bei dem 10 % der Teilchen einen kleineren Durchmesser als d₁₀ und 90 % der Teilchen einen größeren Durchmesser als d₁₀ besitzen. Der d₅₀-Wert entspricht dem mittleren Partikeldurchmesser. Das Ausgangssignal des Partikelmeßgeräts 10 wird einem Meßcomputer 18 zugeführt, in dem das Meßsignal mit einem vorgegebenen Sollwert für die Partikelgröße verglichen wird. Mit Hilfe des Meßcomputers kann auch ein abgeleiteter Meßwert, z.B. die spezifische Oberfläche der Partikel gebildet und als Regelgröße verwendet werden.

Der Ausgang des Meßcomputers 18 ist mit einer Steuer- und Regeleinheit 19 verbunden, die ein Steilsignal zur Nachstellung des Druckluftstroms am Stutzen 16 der Spiralmühle 14 erzeugt. Eine andere Möglichkeit besteht darin, den Produktaufgabestrom mittels der Dosiervorrichtung 15 zu verändern. Die Nachstellung erfolgt, wie bei allen Reglern üblich, in der Weise, daß der durch die Sollwertvorgabe eingestellte Wert für die Partikelgrößenverteilung im Hauptstrom der Förderleitung 17 konstant bleibt. Der beschriebene Regelkreis ist auch für andere mit Luft oder Inertgas betriebene Mühlen, insbes. für Fließbett-Gegenstrahlmühlen geeignet. Der Aufbau und die Wirkungsweise dieses Mühlentyps ist aus der Literatur bekannt (s. z.B. Dr. R. Nied, Aufbereitungs-Technik 23 (1982) 5, S.236 und DE 3 338 138), so daß in diesem Rahmen auf eine detaillierte Beschreibung verzichtet werden kann. Da bei diesem Mühlentyp meistens ein Schaufelradsichter zur Klassierung der Partikel integriert (eingebaut) ist, bietet es sich an, die Drehzahl des Schaufelradsichters als Stellgröße für die Regelung der Partikelgrößenverteilung zu benutzen, d.h. die Regeleinheit 18 muß in diesem Fall (über die Leitung 20) ein Stellsignal zur Veränderung der Schaufelradsichter-Drehzahl liefern.

### Meßbeispiel

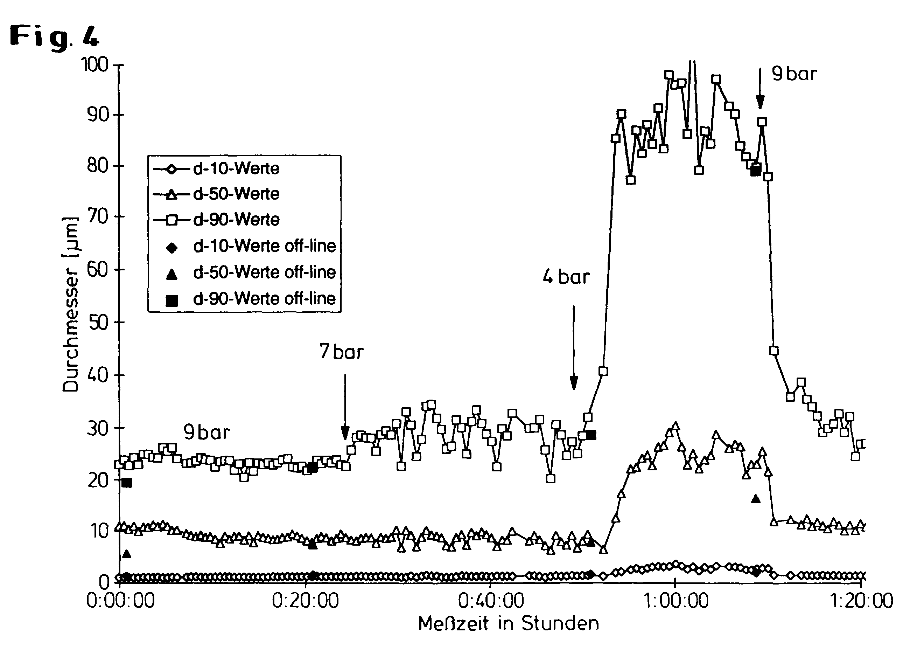

Die im Diagramm gem. Fig. 4 dargestellten Partikelmessungen (Partikelgrößenverteilung als Funktion der Zeit) wurden an einer Spiralstrahlmühle entspr. Fig. 3 durchgeführt. Als Versuchsprodukt diente körniger Zucker, der in der Spiralstrahlmühle 14 zu Puderzucker gemahlen wurde. Der Mengenstrom in der Förderleitung 17 betrug. 90 kg/h, der hinter der Querschnittsverengung 3 abgezweigte Probenstrom 0,9 bis 1,8 kg/h. Als Betriebsparameter wurde zusätzlich der Mahldüsenvordruck am Stutzen 16 der Spiralstrahlmühle in vorgegebenen Zeitabständen variiert ( Druckwerte 9 bar → 7 bar → 4 bar → 9 bar). Aufgetragen sind jeweils die mit dem Laserbeugungsmeßgerät 10 gemessenen d₁₀ , d₅₀ und d₉₀ - Werte. Zur Kontrolle wurde außerdem der Puderzucker in der Förderleitung 17 vom Hauptstrom zu verschiedenen Zeitpunkten durch einen Zyklonabscheider abgetrennt und die Partikelgrößenverteilung (wieder die d₁₀ , d₅₀ und d₉₀ - Werte) dieser Proben statisch, d.h. off-line mit einem zweiten Laserbeugungs-Meßgerät bestimmt. Man erkennt die gute Übereinstimmung zwischen den dynamisch (on-line) und statisch (off-line) gefundenen Meßwerten.

### Legende

- 1: Flansch am Eintritt in die Querschnittsverengung
- 2: Flansch am Austritt der Querschnittsverengung
- 3: Querschnittsverengung
- 4: divergierendes konisches Rohrstück
- 5: konvergierendes konisches Rohrstück
- 6: Entnahmesonde
- 7: Sondenrohr
- 7a-7c: mehrere zusammengeführte Sondenrohre
- 8: Krümmer
- 9: Entnahmeleitung
- 10: Partikelgrößenmeßgerät
- 11: Injektor
- 12: Leitflügel zur zusätzlichen Drallberuhigung
- 13: Ringleitung (Sammelleitung für Sondenrohre 7a,7b,7c)
- 14: Spiralstrahlmühle
- 15: Dosiervorrichtung an der Spiralstrahlmühle 14
- 16: Druckluftstutzen an der Spiralstrahlmühle 14
- 17: pneumatische Förderleitung
- 18: Meßcomputer
- 19: Steuer- und regeleinheit
- 20: Steilsignalleitung zur Veränderung der Schaufelradsichterdrehzahl

## Patentansprüche

1. Verfahren zur kontinuierlichen Entnahme von pulverförmigen Proben aus einer partikelbeladenen Strömung, bei dem aus einem partikelbeladenen Hauptstrom in einer pneumatischen Förderleitung (17) ein Probenstrom abgesaugt und durch eine Entnahmeleitung (9) einem Partikelgrößenmeßgerät (10) zugeführt wird, dadurch gekennzeichnet, daß der Hauptstrom zur Drallberuhigung durch eine Förderleitung (17) mit einer Venturi-düsenartigen Querschnittsverengung (3,4,5) geführt wird, deren Querschnittsfläche 10 % bis 60 % der freien Querschnittsfläche der Förderleitung (17) beträgt und daß stromabwärts der Querschnittsverengung (3,4,5) durch ein oder mehrere Sondenrohre (7) ein Teilstrom aus dem Hauptstrom parallel zu dessen Strömungsrichtung entnommen wird.

2. Verfahren nach Anspruch 1, dadurch gekennzeichnet, daß eine zusätzliche Drallberuhigung durch innerhalb der Querschnittsverengung (3,4,5) rotationssymmetrisch angebrachte, achsenparallele oder schräg angestellte Leitflügel (12) erfolgt.

3. Verfahren nach Anspruch 1 bis 2, dadurch gekennzeichnet, daß die Entnahme durch mehrere Sondenrohre (7a,7b,7c) erfolgt, die zu einer gemeinsamen Entnahmeleitung (9) zusammengeführt sind.

4. Verfahren nach Anspruch 1 bis 3, dadurch gekennzeichnet, daß der Teilstrom aus dem Produkthauptstrom am Ausgang einer Luftstrahlmühle (14) entnommen wird, der das zu mahlende Produkt und Treibluft kontinuierlich zugeführt werden, daß die Partikelgrößenverteilung des Probenstromes gemessen wird und der Produktaufgabestrom und/oder der Treibluftmengenstrom an der Luftstrahlmühle (14) so nachgeregelt werden, daß die Partikelgrößenverteilung im Produktstrom konstant bleibt.

5. Verfahren nach Anspruch 4, dadurch gekennzeichnet, daß der Teilstrom aus dem Produkthauptstrom am Ausgang eines Schaufelradsichters entnommen wird, dem das zu sichtende Produkt vom Austrag einer Luftstrahlmühle und die Sichtluft kontinuierlich zugeführt werden, daß die Partikelgrößenverteilung des Probenstromes gemessen wird und der Produktaufgabestrom bei der Luftstrahlmühle und/oder der Sichtluftmengenstrom und/oder die Schaufelradsichterdrehzahl so nachgeregelt werden, daß die mittlere Partikelgröße im Produktstrom konstant bleibt.

6. Verfahren nach Anspruch 1 bis 4, dadurch gekennzeichnet, daß der Teilstrom aus dem Produkthauptstrom am Ausgang einer Fließbett-Gegenstrahlmühle entnommen wird, der das zu mahlende Produkt und die Treibluft kontinuierlich zugeführt werden, daß die Partikelgrößenverteilung des Probenstromes gemessen wird und der Produktaufgabestrom und/oder der Mahldüsenvordruck und/oder die Drehzahl eines in die Fließbett-Gegenstrahlmühle integrierten Schaufelradsichters so nachgeregelt werden, daß die Partikelgrößenverteilung im Produktstrom konstant bleibt.
